# EUROPEAN PATENT SPECIFICATION

(11) **EP 1 801 180 B1**
(45) Date of publication and mention of the grant of the patent: **31.12.2008**
(21) Application number: 06126590.6
(22) Date of filing: 20.12.2006
(51) Int. Cl.: C09K 8/20, C08F 251/02

(54) **Filtrate reducer for drilling muds**
Filtratreduzierung für Bohrschlamm
Réducteur de filtrage pour des boues de forage

(30) Priority: 23.12.2005 IT VA20050074
(43) Date of publication of application: 27.06.2007
(73) Proprietor: Lamberti Spa, 21041 Albizzate (IT)
(72) Inventor: Vecchi, Stefania, I - 22020, Cavallasca (CO) (IT); Chiavacci, Dario, I - 21040, Castronno (VA) (IT); Demarchi, Cristina, I - 28043, Bellinzago (NO) (IT); Vigano, Laura, I - 20015, Parabiago (MI) (IT); Li BassiI, Giuseppe, I - 21026, Gavirate (VA) (IT)

(56) References cited:
- US-A1- 2004 171 513

## Description

### Technical Field

The present invention relates to an additive for reducing filtrate loss (filtrate reducer) obtained by reaction of carboxymethyl cellulose with an ethylenically unsaturated monomer containing a sulfonic group in the form of acid or salt thereof; the filtrate reducer is useful in water-based drilling muds employed in the drilling and completion of oil and gas wells.

The filtrate reducer is useful at high temperature and pressure conditions

and in the presence of salts and solids.

### Background Art

Drilling muds, which are also called drilling fluids, are complex mixtures of chemicals used in drilling operations for the production of hydrocarbons and natural gas from subterranean reservoirs.

Typically, oil and gas wells are drilled using drilling equipment in the presence of a drilling fluid.

Drilling fluids, generally comprising a liquid or a solid suspension in a dispersing liquid phase, are pumped inside the drilling shaft and exit from the drilling bit through small openings. The drilling fluids return to the surface through the small annulus between the outside of the drilling shaft and the bore hole wall.

Drilling muds perform a number of functions; exemplary of these functions are carrying drill cuttings up to the surface and suspending them when the fluid circulation is stopped, cooling and lubricating the drill bit, creating hydrostatic pressure to avoid uncontrolled blow outs and to help supporting the weight of the bore hole walls, acting as lubricant between the drilling bit and the bore hole walls.

Drilling fluids, moreover, create on the bore hole walls and eventually on the surface of porous geological formation a filter cake having low permeability.

The liquid permeating the filter cake and the formation is called "filtrate".

If the amount of filtrate passing into the formation (filtrate loss) is high, the composition of the drilling fluid itself changes, and this causes loosing control of fluid proprieties; a large fluid loss can cause the deposition of a thick filter cake on the bore hole walls that reduces the diameter of the well bore.

For all these reasons, it is generally desirable that the drilling fluid exhibits a low level of filtrate loss. It is especially desirable that the drilling fluid exhibit a law level of filtrate loss while having specific rheological characteristics of viscosity, plasticity and thixotropy, to promote the removal and carrying away of drill cuttings.

Water-based drilling fluids are generally made of dispersions of clays, such as bentonite, of weighting materials, such as barite, and of other additives, in water or in concentrated salted aqueous solutions. The role of the additives is to regulate the rheology, to control pH, improve lubricity, reduce solid depositions on equipment, to limit the bacterial growth and corrosion, decrease shale hydration and swelling and to control filtrate loss.

Many conventional filtrate reducers have been used to control the filtrate in drilling fluids and to minimise the liquid loss through the formation.

These conventional filtrate reducers are used to inhibit the porosity of the filter cake. Exemplary conventional filtrate reducers include starch, modified starch, cellulose and its derivatives, lignin and its derivatives and synthetic polymers, such as acrylic acid, methacrylic acid and acrylamide copolymers.

The above cited conventional filtrate reducers suffer from well known limitations in applications for the production of oil and gas.

For example, polyacrylates and polyacrylamide show relevant limitations in the presence of high concentrations of salts or of contamination with bivalent cations.

Starch and cellulose derivatives are not stable in the high temperature and high pressure conditions of deep wells, where temperature may easily rise up to 190°C (375°F) and above.

Therefore it would be desirable in the art of drilling oil and gas wells to have drilling fluid additives which are efficient also at high temperature, i.e. at temperature above 150°C (300°F), and whose action is not influenced by solids and salts contamination; such filtrate reducers which efficiently perform their functions at these conditions are often referred to in the art as "HPHT filtrate reducers".

It has now been found that by reacting carboxymethyl cellulose with an ethylenically unsaturated monomer containing a sulfonic group in the form of acid or salt, in specific ratios and conditions, a filtrate reducer is obtained obviating many typical disadvantages of prior art additives.

It is believed that the filtrate reducer of the present invention is primarily a carboxymethyl cellulose grafted with the ethylenically unsaturated monomer, even if it cannot be excluded that it also may contain a minor amount of a homopolymer deriving from the unsaturated monomer.

A carboxymethyl cellulose graft polymer with an ethylenically unsaturated sulfonic acid, 2-acrylamido-2-methylpropane sulfonic acid (AMPS), is described in Hitoshi Kubota et al., "Factors affecting liquid-phase photografting of acrylic acid on cellulose and its derivatives", European Polymer Journal, 33, (1), 67-71, 1997; nonetheless, the carboxymethyl cellulose used as substrate is not water soluble, having degree of substitution (DS) of 0.1; moreover, in the preparation methylenebisacrylamide (MBAA) is used as cross-linker. The obtained polymer is therefore a ter-polymer of carboxymethyl cellulose, AMPS and MBAA.

US 5,075,401, filed in 1989 and assigned to Allied Colloids, describes a method to obtain polymers from a substrate, such as carboxymethyl cellulose, dextran and starch, with ethylenically unsaturated monomers, by using both an oxidizing metal and a peroxy compound; US 5,075,401 also suggest that to obtain the desired high molecular weight, the amount of substrate shall be relatively low in respect of the monomer amount. The polymers of US 5,075,401 are said to be useful as filtrate reducers.

US 5,008,025 relates to an additive for water-based drilling fluids combining a vinyl polymer containing sulfonate groups and a polyanionic cellulose or carboxymethyl cellulose.

### Disclosure of Invention

It has now been found, and it is an object of the present invention, that a grafted copolymer obtained from the reaction of a) from 40% to 90% by weight of carboxymethyl cellulose having DS (degree of substitution) from 0.6 to 1.2; b) from 10 to 60% by weight of ethylenically unsaturated monomers containing a sulfonic group in the form of acid and/or salt

is a filtrate reducer for water-based drilling fluids that is particularly efficient even at high temperature and high pressure conditions and in the presence of salts and solids.

It is a further object of the invention a procedure for the preparation of a filtrate reducer for water-based drilling fluids comprising the following steps: i) mixing from 40 to 90% by weight of carboxymethyl cellulose having DS from 0.6 to 1.2 and an initiator of radical polymerisation at a temperature below 30°C to form a first reaction mixture; ii) admixing with the first reaction mixture from 10 to 60% by weight of at least one ethylenically unsaturated monomers containing a sulfonic group in the form of acid and/or salt under stirring to form a second reaction mixture; iii) heating the second reaction mixture to 60-75°C to initiate a polymerisation reaction and maintaining the second reaction mixture at 60-75°C for 0.5-4 hours to produce a graft copolymer.

It is a further object of the present invention a method for reducing filtrate loss during oil and gas drilling operations, or in the subsequent completing or cementing operations of an oil or gas well, comprising the use of a water-based drilling fluid containing from 0.05 to 3% by weight of the above described filtrate reducer.

It is still another object of the invention a water-based drilling fluid containing from 0.05 to 3% by weight of the above described filtrate reducer.

The grafted copolymer of the invention has Brookfield LVT viscosity at 60 rpm, 20°C and 2% weight concentration of from 50 to 8,000 mPa*s, preferably between 50 and 500 mPa*s.

Contrary to some indications expressed by the prior art (see for example US 4,131,576 and US 4,696,996, where the difficulty of grafting a water soluble monomer, such as acrylic acid, on a water soluble or water dispersed polysaccharide substrate in the presence of water at high solid concentration condition is reported), the present invention provides the reaction product of ethylenically unsaturated sulfonated monomers and carboxymethyl cellulose obtained at high solid concentration condition.

At high temperature, the capability of reducing filtrate loss of the grafted copolymers of the invention is remarkably higher than that shown by purified carboxymethyl cellulose, i.e. by carboxymethyl cellulose having active content above 95% by weight; at these conditions, the filtrate loss volumes, expressed in millilitres and measured according to the method described here below, are smaller than 100 and are remarkably better than those obtained by physically mixing carboxymethyl cellulose and homopolymer from ethylenically unsaturated monomer.

It has also been observed that the capability of reducing filtrate loss can be further enhanced by adding to the grafted copolymer from 5 to 10% by weight of an antioxidant, such as sodium thiosulfate, potassium thiosulfate, sodium sulfite or potassium sulfite.

It is therefore a further object of the invention a filtrate reducer comprising from 90 to 98% by weight of the grafted copolymer of the invention and from 2 to 10% by weight of an antioxidant, preferably sodium thiosulfate.

The filtrate reducers of the invention are rapidly soluble in water-based muds. The wide spectrum of viscosity that they provide allows for a simultaneous effect of filtrate loss reduction and mud thickening.

The procedure for the preparation of the filtrate reducer of the invention is particularly advantageous because it is industrially practicable and does not necessitate a specific equipment; in the preferred embodiments, it avoids the use of organic solvents and/or surfactants and does not originate liquid or solid waste.

According to a preferred embodiment of the invention, the ethylenically unsaturated monomers in the form of aqueous solution are added to carboxymethyl cellulose in the form of powder, the quantity of water in the reaction mixture not exceeding the total weight of ethylenically unsaturated monomers and carboxymethyl cellulose.

According to another embodiment, an organic solvent may be present in the second reaction mixture; the solvent is preferably a lower alcohol, such as methyl alcohol, ethyl alcohol or isopropyl alcohol, or acetone; when an organic solvent is used, the total weight of solvent and possible water shall not exceed the total weight of ethylenically unsaturated monomers and carboxymethyl cellulose.

The carboxymethyl cellulose used in the procedure of the invention is medium viscosity carboxymethyl cellulose, i.e. carboxymethyl cellulose having Brookfield LVT viscosity at 60 rpm, 20°C and 2% by weight comprised between 1,000 and 10,000 mPa*s, and can be raw or purified carboxymethyl cellulose.

Best results are obtained with purified carboxymethyl cellulose.

For the most common applications, that is when the filtrate reducer does not need to perform also as thickening agent, the utilisable carboxymethyl cellulose has Brookfield LVT viscosity at 60 rpm, 20°C and 2% by weight comprised between 1,000 and 3,000 mPa*s.

The ethylenically unsaturated monomers containing a sulfonic group useful for the realization of the invention are: 2-acrylamido-2-methylpropanesulfonic acid (AMPS), allylsulfonic acid, vinylsulfonic acid, methallylsulfonic acid, p-styrenesulfonic acid, and mixture thereof.

The use of AMPS as the sole monomer is particularly preferred.

When 2-acrylamido-2-methylpropane sulfonic acid is used, especially interesting results are obtained by adding from 35 to 45% by weight of 2-acrylamido-2-methylpropane sulfonic acid sodium salt, in the form of 40 to 60% aqueous solution, the percentage being calculated on the total weight of carboxymethyl cellulose and 2-acrylamido-2-methylpropane sulfonic acid sodium salt.

The initiator of radical polymerization is chosen among the normally utilized initiators (such as ammonium persulfate, sodium persulfate, potassium persulfate, benzoyl peroxide, lauryl peroxide, azodiisobutyronitrile, redox couples such as ter-butyl hydroperoxide and sodium metabisulfite) and it is preferably added, at temperature comprised between 10 and 25°C, in such a quantity that the weight ratio between initiator and ethylenically unsaturated monomer is comprised beween 3_{*}10 ⁻³e6_{*}10⁻³.

Preferably, the initiator added on carboxymethyl cellulose is ammonium pesulfate in the form of powder.

Before step ii. of the procedure of the invention takes place, the reaction medium is purged with nitrogen, to inhibit the inactivation of radical species by atmospheric oxygen.

Preferably, the reaction of step iii. is maintained at 60-75°C for about 1 hour to produce a graft copolymer

The graft copolymer of the invention is usually ground.

A drying step is also required when the grafted copolymers are obtained using aqueous reactants.

Drying are grinding are performed with conventional methods.

In addition to grinding, the filtrate reducer of the invention may be prepared for use using any method known to those of ordinary skill in the art.

For example, in one embodiment, the grafted copolymers may be converted into pellets by prilling. In an alternative embodiment, the grafted copolymers may be prepared by extrusion into strands and chopping.

A further advantage of the procedure of the present invention is that it is not necessary to separate the reaction product by precipitation.

Furthermore, the filtrate reducer of the invention, showing excellent performances, can be used directly without any need of washing or purification.

In order to evaluate the filtrate loss reduction performance of the filtrate reducers of the invention and of filtrate reducers of the prior art the test described here below was carried out.

A suspension (simulating the drilling fluid) is prepared as per the following formulation, by means of a Multimixer ® Model 9B with 9B29X impellers or equivalents), by adding in sequence the following products:
- Saturated sodium chloride aqueous solution (CAS No. 7647-15-5): 350 cm³±5 cm^{3;}
- API Standard Evaluation "Base Clay" (conforming to API specification 13A, XVI edition, February 2004, § 4.2.5): 35g;
- NaHCO3 (CAS No. 144-55-8): 1.0 ± 0.1g;

After stirring 10 minutes, the filtrate reducer (5.0 ± 0.1 g) is added and the mixture is stirred 20 minutes more.

The obtained suspension is placed in a hot rolling cell.

The cell is sealed and rolled for 16 hours in a pre-heated oven at 193°C (API RP 131, VII edition, February 2004, § 20.5).

This treatment simulates the thermal stress applied to the mud during the recycling in the well.

After the rolling period is completed, the cell is removed from the oven and cooled to room temperature in a cold water-bath.

The cell is opened, the suspension poured into a filter press cell and the filtrate volume is determined at 25°C ± 1°C and 690 KPa ± 35 KPa.

The filtrate loss volume (referred to as FLc in the following tables) is expressed in millilitres; the lower is the value of FLc, the better is the performance of the filtrate reducer.

### Example 1

6 Kg of purified carboxymethyl cellulose, having 98% as active content on dry basis, a degree of substitution of 0.88, 6.9% as water content and Brookfield LVT viscosity of 1080 mPa*s at 2% in deionized water at 20°C and 60 rpm (CMC1), were placed in a reactor and mechanically mixed for 10 minutes at 20°C with 19.6 grams of ammonium persulfate, while removing oxygen and purging with nitrogen.

8 kg of 50% water solution of 2-acrylamido 2-methylpropanesulfonic acid sodium salt, were added in 25 minutes to the blend of carboxymethyl cellulose and initiator, keeping the temperature at 19°-20°C, under continuos stirring.

The reaction mixture was heated at 65°-70°C and kept at this temperature under stirring for 30 minutes. The temperature was then risen up to 70°-75°C and kept for 60 minutes.

The mixture was cooled to 45°C and then unloaded, dried and grinded to give the filtrate reducer RF1.

RF1 shows a Brookfield LVT viscosity at 60 rpm and 20°C of 225 mPa*s in a 2% deionized water solution.

### EXAMPLE 2 (Comparative)

A homopolymer of 2-acrylamido 2-methylpropanesulfonic acid sodium salt was synthesized by reacting at 70°C a 40% water solution of AMPS sodium salt in the presence of sodium metabisulfite and ammonium persulfate.

The resulting homopolymer was isolated, dried and mixed with 6 parts by weight of CMC1, to give the filtrate reducer RF1mix.

RF1 mix shows a Brookfield LVT viscosity at 60 rpm and 20°C of 159 mPa *s in a 2% deionized water solution.

### Measurement of the Filtrate Loss on products from Examples 1 and 2

The filtrate loss volumes (FL_{c}) of CMC1, RF1 and RF1mix are shown in the following table (Table 1).

**Table 1**

| | FL_{C} (ml) |
|---|---|
| RF1 | 23 |
| CMC1 | 134 |
| RF1mix | 112 |

The filtrate loss volume of RF1 was also measured carrying out the test on a suspension where a little amount of sodium thiosulfate (0.3 grams) was added. The result was 11 ml.

### Gel Permeation Chromatography analysis on products from Examples 1 and 2

The GPC (Gel Permeation Chromatography) analysis of RF1 shows a single peak, whose average molecular weight is about 390.000 dalton.

The same analysis run on CMC1 gives an average molecular weight of about 300.000 dalton, with reference to GPC universal calibration curve.

In the filtrate reducer of the invention (RF1) the presence of relevant amounts of polymer having an average molecular weight higher than that of starting carboxymethyl cellulose, confirms the fact that the reaction of the invention leads to the formation of a graft copolymer of carboxymethyl cellulose.

Again by GPC RF1 mix was analysed: GPC confirmed the presence of two separate peaks with different molecular weight.

### Thermal Gravimetric Analysis on products from Examples 1 and 2 at variable temperature.

A comparative thermal gravimetric determination of CMC1, RF1 and RF1 mix was made by using TGA (Thermal Gravimetric Analysis), an analysis that allows the measurement of weight loss of samples as a function of the temperature increase and time.

For the thermal gravimetric determination, the samples have been previously dried and conditioned overnight in vacuum oven at 50°C.

A SETARAM 92-12 instrument was used for the measurements.

The thermogravimetric curves were obtained in air atmosphere by setting the temperature increase at 10°C per minute; the weight loss is related to temperature.

It was observed that CMC1 shows a quick weight loss, over 50%, between 250° and 300°C, while the weight loss of RF1 is lower and occurs in a wider and higher range of temperature, between 270° and 400°C.

It was also observed that in the range between 150° and 200° C, (high temperature working condition for a filtrate reducers), RF1 shows the lowest weight loss.

### "Hot rolling" test on the products of Examples 1 and 2 at fixed temperature.

Three 2% solutions were prepared in saturated salted water (NaCl saturated water) with samples from CMC1, RF1 and RF1mix.

The solutions, respectively named sCMC1, sRF1 and sRF1mix, were placed in three sets of hot rolling cells (according to API RP 13l - VII ed. - February 2004, § 20.6) and constantly rolled in an oven for 16 hours at 25°, 90° and 193°.

In the following table (Table 2) the appearance of the solutions at the end of the hot rolling test is reported.

**Table 2**

| T° | sCMC1 * | sRF1 | sRF1mix* |
|---|---|---|---|
| 25°C | homogeneous colourless | homogeneous yellowish | homogeneous yellowish |
| 90°C | homogeneous colourless | homogeneous dark yellow | not homogeneous yellowish with precipitation of black particles |
| 193° C | not homogeneous with separation of black particles partly settled and partly floating | homogeneous orange-yellow | not homogeneous with separation of black particles partly settled and partly floating |

| | | | |
|---|---|---|---|
| *comparative solutions | | | |

### EXAMPLE 3.

750 grams of raw carboxymethyl cellulose, having 75% of active content on dry basis, DS 0.97, Brookfield LVT viscosity at 60 rpm and 20°C of 500 mPa*s in 2% deionized water solution (CMC2), were placed in a reactor and mechanically mixed at 20°C with 1.52 g of ammonium persulfate for 10 minutes, while removing air and purging with nitrogen.

680 g of a 50% water solution of 2-acrylamido 2-methylpropanesulfonic acid sodium salt were added in 10 minutes to the blend of carboxymethyl cellulose and initiator, keeping the temperature at 19°-20°C under continuos stirring.

The reaction mixture was heated to 65°-70°C and kept at this temperature under stirring for 30 minutes.

The temperature was then risen to 70°-75°C and kept for 60 minutes.

The mixture was cooled to 45°C dried to remove excess of moisture and grinded, to give the filtrate reducer RF2.

RF2 shows Brookfield LVT viscosity at 60 rpm and 20°C of 71 mPa*s in 2% deionized water solution.

A filtrate reducer is prepared by mechanically mixing 94 parts by weight of RF2 and 6 parts by weight of sodium thiosulfate, to obtain the filtrate reducer RF2t.

### EXAMPLE 4 (Comparative)

A homopolymer of 2-acrylamido 2-methylpropanesulfonic acid sodium salt was synthesised by reacting a 42% water solution of AMPS sodium salt in the presence of sodium metabisulfite at 75°C.

The resulting homopolymer was isolated, dried and mixed with 6.2 parts by weight of CMC2, to give the filtrate reducer RF2mix.

RF2mix shows Brookfield LVT viscosity at 60 rpm and 20°C of 188 mPa*s in 2% deionized water solution.

### Measurement of the Filtrate Loss on products from Examples 3 and 4

The filtrate loss volumes (FL_{c}) of CMC2, RF2t and RF2mix are shown in the following table (Table 3).

**Table 3**

| | FL_{C} (ml) |
|---|---|
| RF2t | 35 |
| CMC2 | 145 |
| RF2mix | 98 |

### EXAMPLE 5.

750 g of purified carboxymethyl cellulose, having DS 1.0 and Brookfield LVT viscosity at 60 rpm and 20°C of 8,000 mPa*s at 2% in deionized water (CMC3), were placed in a reactor and mechanically stirred at 20°C with 2.13 g of ammonium persulfate for 10 minutes, removing air was removed purging with nitrogen.

952 g of a 50% water solution of 2-acrylamido 2-methylpropanesulfonic acid sodium salt were slowly added in 10 minutes to the mixture of carboxymethyl cellulose and initiator, keeping the temperature at 19°-20°C under continuos stirring.

The reaction mixture was heated at 65°-70°C and kept at this temperature under stirring for 30 minutes. The temperature was then risen to 70°-75°C and kept for 60 minutes.

The mixture was cooled to 45°C then dried to remove excess of moisture and ground to give the filtrate reducer RF3.

RF3 shows Brookfield LVT viscosity at 60 rpm, 20°C and 2% deionized water solution of 6,000 mPa*s.

A filtrate reducer was prepared by mechanically mixing 94 parts by weight of RF3 and 6 parts by weight of sodium thiosulfate, to obtain the filtrate reducer RF3t.

EXAMPLE 6 (Comparative)

A homopolymer of 2-acrylamido 2-methylpropanesulfonic acid (AMPS) sodium salt was synthesised by polymerising a 42% water solution of AMPS sodium salt in the presence of sodium metabisulfite and ammonium persulfate at about 75°C.

The resulting homopolymer was isolated, dried and mixed with 6.1 parts by weight of CMC3, to obtain the filtrate reducer RF3mix.

A filtrate reducer is prepared by mechanically mixing 94 parts by weight of RF3mix has been blended with 6 parts by weight of sodium thiosulfate, to obtain the filtrate reducer RF3mixt.

Another filtrate reducer is prepared by mechanically mixing 94 parts by weight of CMC3 has been blended with 6 parts by weight of sodium thiosulfate, to obtain the filtrate reducer CMC3t.

### Measurement of the Filtrate Loss on products from Examples 5 and 6

The filtrate loss volumes (FL_{c}) of CMC3t, RF3t and RF3mixt are shown in the following table (Table 4).

**Table 4**

| | FL_{C} (ml) |
|---|---|
| RF3t | 31 |
| CMC3t | 125 |
| RF3mixt | 100 |

## Claims

1. Grafted copolymer obtained from the reaction of a) from 40% to 90% by weight of carboxymethyl cellulose having DS from 0.6 to 1.2; b) from 10 to 60% by weight of ethylenically unsaturated monomers containing a sulfonic group in the form of acid and/or salt.

2. Grafted copolymer according to claim 1., wherein the ethylenically unsaturated monomers are 2-acrylamido-2-methylpropane sulfonic acid sodium salt.

3. Grafted copolymer according to claim 2. having Brookfield LVT viscosity at 60 rpm, 20°C and 2% by weight comprised between 50 and 8.000 mPa∗s.

4. Grafted copolymer according to claim 3. having Brookfield LVT viscosity at 60 rpm, 20°C and 2% by weight comprised between between 50 and 500 mPa∗s.

5. Procedure for the preparation of a filtrate reducer for water-based drilling fluids comprising the following steps: i) mixing from 40 to 90% by weight of carboxymethyl cellulose having DS from 0.6 to 1.2 and Brookfield LVT viscosity at 60 rpm, 20°C and 2% by weight comprised between 1,000 and 10,000 mPa∗s and an initiator of radical polymerization at a temperature below 30°C to form a first reaction mixture; ii) admixing with the first reaction mixture from 10 to 60% by weight of at least one ethylenically unsaturated monomers containing a sulfonic group in the form of acid and/or salt under stirring to form a second reaction mixture; iii) heating the second reaction mixture to 60-75°C to initiate a polymerisation reaction and maintaining the second reaction mixture at 60-75°C for 0.5-4 hours to produce a graft copolymer.

6. Procedure for the preparation of a filtrate reducer according to claim 5., wherein the ethylenically unsaturated monomers are in the form of aqueous solution and are added to carboxymethyl cellulose which is in the form of powder, the quantity of water in the reaction mixture not exceeding the total weight of ethylenically unsaturated monomers and carboxymethyl cellulose.

7. Procedure for the preparation of a filtrate reducer according to claim 6., wherein the ethylenically unsaturated monomers are 2-acrylamido-2-methylpropane sulfonic acid.

8. Procedure for the preparation of a filtrate reducer according to claim 7., wherein from 35 to 45% by weight of 2-acrylamido-2-methylpropane sulfonic acid sodium salt in the form of 40 to 60% aqueous solution, are added, the percentage being calculated on the total weight of carboxymethyl cellulose and 2-acrylamido-2-methylpropane sulfonic acid sodium salt.

9. Procedure for the preparation of a filtrate reducer according to claim 8., wherein the carboxymethyl cellulose has Brookfield LVT viscosity at 60 rpm, 20°C and 2% by weight comprised between 1,000 and 3,000 mPa∗s.

10. Filtrate reducer for water-based drilling fluids comprising a grafted copolymer obtained from the reaction of a) from 40% to 90% by weight of carboxymethyl cellulose having DS from 0.6 to 1.2; b) from 10 to 60% by weight of ethylenically unsaturated monomers containing a sulfonic group in the form of acid and/or salt.

11. Filtrate reducer for water-based drilling fluids according to claim 10., comprising from 90 to 98% by weight of grafted copolymer and from 2 to 10% by weight of an antioxidant

12. Filtrate reducer for water-based drilling fluids according to claim 11., wherein the antioxidant is sodium thiosulfate.

13. Method for reducing filtrate loss during oil and gas drilling operations, or in the subsequent completing or cementing operations of oil and gas wells, comprising the use of a water-based drilling fluid containing from 0.05 to 3% by weight of a filtrate reducer obtained from the reaction of a) from 40% to 90% by weight of carboxymethyl cellulose having DS from 0.6 to 1.2; b) from 10 to 60% by weight of ethylenically unsaturated monomers containing a sulfonic group in the form of acid and/or salt.

14. Method for reducing filtrate loss in extractive drilling operation of hydrocarbons and gas, or in the subsequent completing or cementing operations according to claim 13., wherein the ethylenically unsaturated monomers are 2-acrylamido-2-methylpropane sulfonic acid sodium salt.

15. Water based drilling fluid containing from 0.05 to 3% by weight of a filtrate reducer obtained from the reaction of a) from 40% to 90% by weight of carboxymethyl cellulose having DS from 0.6 to 1.2; b) from 10 to 60% by weight of ethylenically unsaturated monomers containing a sulfonic group in the form of acid and/or salt.

16. Water based drilling fluid containing from 0.05 to 3% by weight of a filtrate reducer obtained from the reaction of a) from 55% to 65% by weight of carboxymethyl cellulose having DS from 0.6 to 1.2; b) from 35 to 45% by weight of 2-acrylamido-2-methylpropane sulfonic acid sodium salt.

## Patentansprüche

1. Pfropfcopolymer, gewonnen aus der Reaktion a) aus 40% bis 90% Gewichtsanteilen einer Carboxymethylcellulose mit DS zwischen 0,6 und 1,2; b) aus 10 bis 60% Gewichtsanteilen eines ethylenisch ungesättigten Monomers, der eine sulfonische Gruppe in Form einer Säure und/oder eines Salzes enthält.

2. Pfropfcopolymer gemäß Patentanspruch 1., in dem die ethylenisch ungesättigten Monomere aus einem 2-Acrylamido-2-methylpropansulfonsäure-Natriumsalz bestehen.

3. Pfropfcopolymer gemäß Patentanspruch 2., mit einer Brookfield LVT Viskosität bei 60 U/min, 20°C und 2% Gewichtsanteil zwischen 50 und 8.000 mPa∗s.

4. Pfropfcopolymer gemäß Patentanspruch 3. mit einer Brookfield LVT Viskosität bei 60 U/min, 20°C und 2% Gewichtsanteil zwischen 50 und 500 mPa∗s.

5. Prozedur zur Zubereitung eines Filtratreduzierers für auf Wasser basierende Bohrspülungen, die folgende Schritte beinhaltet: i) Mischen von 40 bis 90% Gewichtsanteilen Carboxymethylcellulose mit DS zwischen 0,6 und 1,2 und Brookfield LVT Viskosität bei 60 U/min, 20°C und 2% Gewichtsanteilen zwischen 1.000 und 10.000 mPa∗s und einem Radikalpolymerisationsinitiators bei einer Temperatur unter 30°C, um eine erste Reaktionsmischung zu erhalten; ii) unter Rühren Beimengung zur ersten Reaktionsmischung von 10 bis 60% Gewichtanteilen von mindestens einem ethylenisch ungesättigten Monomer, der eine Sulfongruppe in Form einer Säure/oder eines Salzes enthält, um eine zweite Reaktionsmischung zu erhalten; iii) Erhitzen der zweiten Reaktionsmischung auf 60-75°C, um eine Polymerisationsreaktion zu initiieren und Aufrechterhalten der zweiten Reaktionsmischung bei 60-75°C über 0,5-4 Stunden, um einen Pfropfcopolymer zu erhalten.

6. Prozedur zur Zubereitung eines Filtratreduzierers gemäß Patentanspruch 5., worin die ethylenisch ungesättigten Monomere in Form einer wässrigen Lösung vorliegen und der Carboxymethylcellulose, die in Pulverform vorliegt, beigemengt werden, wobei die Wassermenge in der Reaktionsmischung nicht das Gesamtgewicht der ethylenisch ungesättigten Monomere und der Carboxymethylcellulose überschreiten darf.

7. Prozedur zur Zubereitung eines Filtratreduzierers gemäß Patentanspruch 6., worin die ethylenisch ungesättigten Monomere aus 2-Acrylamido-2-methylpropansulfonsäure bestehen.

8. Prozedur zur Zubereitung eines Filtratreduzierers gemäß Patentanspruch 7., worin zwischen 35 und 45% Gewichtsanteile eines 2-Acrylamido-2-methylpropansulfonsäure-Natriumsalzes in Form einer 40-60%igen wässrigen Lösung beigemengt werden und der Prozentsatz bezogen auf das Gesamtgewicht der Carboxymethylcellulose und des 2-Acrylamido-2-methylpropansulfonsäure-Natriumsalzes errechnet wird.

9. Prozedur zur Zubereitung eines Filtratreduzierers gemäß Patentanspruch 8., worin die Carboxymethylcellulose eine Brookfield LVT Viskosität bei 60 U/min, 20°C und 2% Gewichtsanteilen zwischen 1.000 und 3.000 mPa∗s aufweist.

10. Filtratreduzierer für auf Wasser basierende Bohrspülungen, der einen Pfropfcopolymer enthält, der aus der Reaktion a) aus 40% bis 90% Gewichtsanteilen Carboxymethylcellulose mit DS zwischen 0,6 und 1,2; b) aus 10 bis 60% Gewichtsanteilen ethylenisch ungesättigter Monomere, die eine Sulfongruppe in Form einer Säure und/oder Salzes enthalten, gewonnen wurde.

11. Filtratreduzierer für auf Wasser basierende Bohrspülungen gemäß Patentanspruch 10., der zwischen 90 und 98% Gewichtsanteile eines Pfropfcopolymers und zwischen 2 und 10% Gewichtsanteilen eines Antioxidationsmittels enthält.

12. Filtratreduzierer für auf Wasser basierende Bohrspülungen gemäß Patentanspruch 11., worin das Antioxydationsmittel Natriumthiosulfat ist.

13. Methode zur Reduzierung des Filtratverlusts während der Öl- und Gasbohroperationen oder während der nachfolgenden Vollendungs- oder Zementierarbeiten von Öl- und Gasbohrungen, die die Verwendung einer auf Wasser basierenden Bohrspülung beinhaltet, die zwischen 0,05 und 3% Gewichtsanteile eines Filtratreduzierers enthält, der aus der Reaktion a) aus 40% bis 90% Gewichtsanteilen Carboxymethylcellulose mit DS zwischen 0,6 und 1,2; b) aus 10 bis 60% Gewichtsanteilen ethylenisch ungesättigter Monomere, die eine sulfonische Gruppe in Form einer Säure und/oder eines Salzes enthalten, gewonnen werden.

14. Methode zur Reduzierung des Filtratverlusts während der Bohroperationen zur Kohlenwasserstoff- und Gasförderung oder während der nachfolgenden Vollendungs- oder Zementierarbeiten gemäß Patentanspruch 13., worin die ethylenisch ungesättigten Monomere aus 2-Acrylamido-2-methylpropansulfonsäure-Natriumsalz bestehen.

15. Bohrspülung auf Wasserbasis, die zwischen 0,05 und 3% Gewichtsanteile eines Filtratreduzierers enthält, der aus der Reaktion a) aus 40% bis 90% Gewichtsanteilen Carboxymethylcellulose mit DS zwischen 0,6 und 1,2; b) aus 10 bis 60% Gewichtsanteilen ethylenisch ungesättigter Monomere, die eine Sulfongruppe in Form einer Säure und/oder eines Salzes enthalten, gewonnen wurde.

16. Bohrspülung auf Wasserbasis, die zwischen 0,05 und 3% Gewichtsanteile eines Filtratreduzierers enthält, der aus der Reaktion a) aus 55% bis 65% Gewichtsanteilen Carboxymethylcellulose mit DS zwischen 0,6 und 1,2; b) aus 35 bis 45% Gewichtsanteilen eines 2-Acrylamido-2-methylpropansulfonsäure-Natriumsalzes, gewonnen wird.

## Revendications

1. Copolymère greffé obtenu en faisant réagir a) de 40 % à 90 % en poids de carboxyméthylcellulose ayant un degré de substitution de 0,6 à 1,2 et b) de 10 à 60 % en poids de monomères à insaturation éthylénique contenant un groupe sulfonique sous forme d' acide et/ou de sel ;

2. Copolymère greffé selon la revendication 1, lesdits monomères à insaturation éthylénique étant le sel sodique de l'acide 2-acrylamido-2-méthylpropanesulfonique ;

3. Copolymère greffé selon la revendication 2, ayant une viscosité Brookfield LVT, mesurée à 60 tours/minute, 20 °C et 2 % en poids, comprise entre 50 et 8000 mPa∗s ;

4. Copolymère greffé selon la revendication 3, ayant une viscosité Brookfield LVT, mesurée à 60 tours/minute, 20 °C et 2 % en poids, comprise entre 50 et 500 mPa*s ;

5. Procédure de préparation d' un réducteur de filtrat destiné à des fluides de forage à base d' eau, ladite procédure comprenant les étapes suivantes : i) mélange de 40 à 90 % en poids de carboxyméthylcellulose ayant un degré de substitution de 0,6 à 1,2 et une viscosité Brookfield LVT, mesurée à 60 tours/minute, 20 °C et 2 % en poids, comprise entre 1000 et 10 000 mPa∗s et d'un initiateur de polymérisation radicalaire, à une température inférieure à 30 °C, pour former un premier mélange réactionnel ; ii) ajout sous agitation, au premier mélange réactionnel, de 10 à 60 % en poids d' au moins un monomère à insaturation éthylénique contenant un groupe sulfonique sous forme d' acide et/ou de sel, pour former un second mélange réactionnel ; iii) chauffage du second mélange réactionnel à une température allant de 60 à 75 °C, pour initier une réaction de polymérisation, et maintien du second mélange réactionnel à une température de 60 à 75 °C pendant 0,5 à 4 heures, pour produire un copolymère greffé ;

6. Procédure de préparation d' un réducteur de filtrat selon la revendication 5, suivant laquelle les monomères à insaturation éthylénique sont sous la forme d' une solution aqueuse et sont ajoutés à la carboxyméthylcellulose, laquelle est sous la forme d' une poudre, la quantité d' eau dans le mélange réactionnel ne dépassant pas la masse totale de monomères à insaturation éthylénique et de carboxyméthylcellulose ;

7. Procédure de préparation d' un réducteur de filtrat selon la revendication 6, les monomères à insaturation éthylénique étant de l'acide 2-acrylamido-2-méthylpropanesulfonique ;

8. Procédure de préparation d' un réducteur de filtrat selon la revendication 7, suivant laquelle de 35 à 45 % en poids de sel sodique de l'acide 2-acrylamido-2-méthylpropanesulfonique, sous la forme d' une solution aqueuse de 40 à 60 %, sont ajoutés, le pourcentage étant calculé sur la base du poids total de ladite carboxyméthylcellulose et dudit sel sodique de l' acide 2-acrylamido-2-méthylpropanesulfonique ;

9. Procédure de préparation d'un réducteur de filtrat selon la revendication 8, ladite carboxyméthylcellulose ayant une viscosité Brookfield LVT, mesurée à 60 tours/minute, 20 °C et 2 % en poids, comprise entre 1000 et 3000 mPa∗s ;

10. Réducteur de filtrat pour fluides de forage à base d' eau, ledit réducteur de filtrat comprenant un copolymère greffé obtenu en faisant réagir a) de 40 % à 90 % en poids de carboxyméthylcellulose ayant un degré de substitution de 0,6 à 1,2 ; et b) de 10 à 60 % en poids de monomères à insaturation éthylénique contenant un groupe sulfonique sous forme d' acide et/ou de sel ;

11. Réducteur de filtrat pour fluides de forage à base d' eau selon la revendication 10, ledit réducteur de filtrat comprenant de 90 à 98 % en poids d'un copolymère greffé et de 2 à 10% en poids d'un antioxydant ;

12. Réducteur de filtrat pour fluides de forage à base d' eau selon la revendication 11, ledit antioxydant étant le thiosulfate de sodium ;

13. Procédé de réduction de perte de filtrat pendant des opérations de forage de gaz ou de pétrole, ou lors des opérations ultérieures de conditionnement ou de cimentation de puits de gaz et de pétrole, ledit procédé impliquant l'utilisation d'un fluide de forage à base d'eau contenant de 0,05 à 3 % en poids d' un réducteur de filtrat obtenu en faisant réagir a) de 40 % à 90 % en poids de carboxyméthylcellulose ayant un degré de substitution de 0,6 à 1,2 et b) de 10 à 60 % en poids de monomères à insaturation éthylénique contenant un groupe sulfonique sous forme d'acide et/ou de sel ;

14. Procédé de réduction de perte de filtrat lors d' une opération de forage d' extraction d' hydrocarbures et de gaz, ou d' opérations subséquentes de conditionnement ou de cimentation selon la revendication 13, les monomères à insaturation éthylénique étant sous la forme de sel sodique de l'acide 2-acrylamido-2-méthylpropanesulfonique ;

15. Fluide de forage à base d' eau contenant de 0,05 à 3% en poids d' un réducteur de filtrat, ledit réducteur de filtrat étant obtenu en faisant réagir a) de 40 % à 90 % en poids de carboxyméthylcellulose ayant un degré de substitution de 0,6 à 1,2 et b) de 10 à 60 % en poids de monomères à insaturation éthylénique contenant un groupe sulfonique sous forme d' acide et/ou de sel ;

16. Fluide de forage à base d' eau contenant de 0,05 à 3% en poids d' un réducteur de filtrat, ledit réducteur de filtrat étant obtenu en faisant réagir a) de 55 % à 65 % en poids de carboxyméthylcellulose ayant un degré de substitution de 0,6 à 1,2 et b) de 35 à 45 % en poids de sel sodique d'acide 2-acrylamido-2-méthylpropanesulfonique.
